Europäisches Patentamt

European Patent Office

Office européen des brevets

(11) Publication number: **0 093 617**
**B1**

(12) EUROPEAN PATENT SPECIFICATION

(45) Date of publication of patent specification: **18.01.89**

(21) Application number: **83302491.2**

(22) Date of filing: **03.05.83**

(51) Int. Cl.⁴: **H 02 G 15/18**

(54) **Cable joint protection.**

(30) Priority: **03.05.82 US 374558**

(43) Date of publication of application:
**09.11.83 Bulletin 83/45**

(45) Publication of the grant of the patent:
**18.01.89 Bulletin 89/03**

(84) Designated Contracting States:
**AT BE CH DE FR IT LI NL SE**

(56) References cited:
EP-A-0 025 691
EP-A-0 050 009
GB-A-2 069 773

SIGNALFORM S.A (PTY) LTD:BROCHURE 11KV
THROUGH JOINT PAPER LEAD
PIRELLI COMPANY BROCHURE : 15KV
ACRYILIC RESIN JOINTS

(73) Proprietor: **RAYCHEM CORPORATION (a
Delaware corporation)
300 Constitution Drive
Menlo Park, California 94025 (US)**

(72) Inventor: **Pokojny, Rudolf
1238 Mayhew Drive
San Jose California 95121 (US)**
Inventor: **Larsson, Peter Lars
303 Cypress Point Drive
Mountain View California 94041 (US)**

(74) Representative: **Jones, David Colin et al
Raychem Limited Intellectual Property Law
Department Swan House 37-39 High Holborn
London WC1 V6AA (GB)**

Courier Press, Leamington Spa, England.

## Description

This invention relates to the enclosing, for purposes of mechanical and environmental protection, of cable joints that have a non-uniform cross-section.

Certain cables may require additional mechanical and environmental protection, especially in joint areas, if they are to be reliable over long periods. In joint areas, protective layers may have been stripped away in order to make the joint, and ordinarily must be replaced by protection equally as good. This is generally true whether the cables are current-carrying (ie., power distribution of transmission, telecommunication, or cable television), optical fiber, or other. This discussion applies to the jointing of all types of cables where joint cases may be used, although for the sake of clarity, it will focus on current-carrying cables.

Current-carrying cables generally comprise one or more conductors which may be of solid metal or of stranded construction, and which are typically of copper or aluminium. They are insulated from one another by materials such as oil impregnated paper or polymers, which may be cross-linked to give then superior properties. Individually insulated conductors are known as cores. The type and amount of insulation is determined largely by the voltage rating of the cable in the case of power cables or by the need for mechanical strength in the case of telecommunication cables.

The core insulation may be surrounded by one or more sheaths. Oil impregnated paper insulation, used for some power cables, is typically surrounded by a metal sheath, generally of lead or aluminum, to protect the insulation from moisture. Polymer insulated power cables may require the additional insulation provided by one or more polymeric sheaths generally applied by extrusion.

The core or cores may be surrounded by a layer of metal armor, screen and/or shielding in the form of wire, sheet, mesh, screen or tape, generally of steel or aluminum, which may provide a path to ground and carry fault currents. Armoring in addition provides longitudinal strength and mechanical protection, especially desirable for buried cable. For some applications, these metal components may be covered by or embedded in a compound to prevent the ingress of moisture. High voltage power cables may have each core surrounded by its own screen or shielding, but there is usually only one metal armor layer positioned near the outer protective jacket.

An outer protective jacket typically provides further electrical, mechanical and environmental protection, and polymer layers such as polyvinyl chloride are commonly employed.

A preferred joint enclosure for telecommunication cables is a recoverable polymeric sleeve, preferably a heat-shrinkable polymeric sleeve. Polymeric heat-recoverable materials and articles formed therefrom are disclosed in U.S. Patent Nos. 2,027,962 to Currie and 3,086,242 to Cook et al. Recoverable articles which are recoverable without heat are disclosed in U.S. Patent Nos. 4,070,746 to Evans et al, 4,135,553 to Evans et al and 4,179,320 to Midgley et al.

These sleeves may be tubular, requiring positioning around one cable end prior to jointing and subsequent repositioning around the joint, or they may be of wraparound design, such as those disclosed in U.S. Patent Nos. 3,455,336 to Ellis and 4,200,676 to Caponigro et al. A layer of mastic or adhesive may be interposed between the jointed cables and the sleeve to provide watertight environmental sealing, especially desirable for buried cable. Wrapable sleeve enclosures are preferred for buried cable to minimize trench length and excavation costs.

An inner protective liner is desirably positioned around the cable joint before installation of the sleeve to provide additional mechanical protection. These liners generally bridge the joint and provide support for the recovered sleeve. Improved impact resistance, especially necessary for buried cables with rock backfill, is provided. Known liners may be of tubular design, or may be wraparound split-tubes, half-shells or sheet. A wraparound liner, suitable for a telecommunication splice case and comprising a fibrous sheet support and a vapour impermeable metal layer is disclosed in U.K. Published Application 2,059,873. A thermoplastic support layer with a foamed polymeric heat barrier layer is disclosed in U.K. published application 2,069,773. Sheet liners may have folded lines to facilitate wrapping, and crowned ends to facilitate neck-down onto the cables, as taught in, for example, UK Patent No. 2059873 and UK Patent Application Publication No. 2069773.

A kit for jointing power cables has been disclosed by Sigmaform S.A. (Pty) Ltd., and this employs a copper daffy strip that extends around a substantially uniform cross-section and that is enclosed within a sleeve that is shrunk over the joint.

European Patent Application Publication No. 0 050 009A relates to an assembly for enclosing a telecommunication cable splice in which an expansive support arrangement is disposed around the splice and provides an outward force for urging a sealing member into contact with the joined longitudinal edges of an outer heat recoverable wraparound sleeve. The support arrangement is of generally cylindrical configuration, and in one embodiment comprises four longitudinal bars extending between two end rings to form a rigid, open cage structure. The arrangement has tapering fingers at each end that are radially movable to produce a smooth transition from the splice diameter to the cable diameter.

Enclosures for joints in power cables are similar to those used for joints in telecommunication cable etc., although there are certain differences. Bitumen filled metal or concrete molds were originally used for joint enclosures, later replaced by resin-filled boxes of steel, cast iron, lead or tinned copper, and today recoverable polymeric sleeves and liners are used, such as those disclosed in U.S. Patent Nos. 4,142,592 to Brusselmans and 4,282,397 to Siedenburg et al. The cables will generally have a metal sheath, screen, shielding, or armoring, which should be interconnected across the joint to provide continuity of shielding or of mechanical protection or to provide a fault current path. A metal box, metal liner, metal braid or metal tape may provide the desired electrical continuity.

Power cables generate a significant amount of heat in operation, and the conductor of a polymer insulated power cable, for instance may reach a temperature in normal operation of 70°C, be rated for maximum continuous operation of 90°C and have a short-term rating of 130°C. Heat transfer from the cable to the environment can become critical, since insulation degradation is generally an exponential function of temperature. A liner which comprises a generally solid-wall canister can, therefore, under certain circumstances have the double disadvantage of unnecessary bulk and the poor heat transfer that results from the entrapment of an insulating layer of air. The only satisfactory way of avoiding the overheating that follows, is to fill the canister with a heat conductive potting compound.

It is an object of the instant invention to overcome the disadvantages set forth above by reducing the overall size of the joint case and by improving its heat transfer characteristics, while providing adequate mechanical support, electrical properties or environmental protection as desired.

In accordance with one aspect of the present invention, there is provided an assembly for enclosing a cable joint of non-uniform cross-section, comprising (i) a liner that is adapted to be wrapped conformingly around the cable joint, the liner comprising a plurality of side-by-side elongate metal elements extending along substantially its whole length, and (ii) a recoverable sleeve which is positionable around the liner after the liner has been wrapped around the joint, the assembly being characterised in that the elongate metal elements are of substantially rectangular cross-section having a width of at least 5mm and a thickness of at least 0.5mm, and in that the elongate metal elements are held together by rigid interconnecting members such that at least the ends of the elements are movable transversely relative to one another such that the liner is conformable to a change in cross-section of the joint.

The sleeve may be recoverable over a portion only, or over its entire surface, for example by heat.

The elements of the liner may be held together by sheet material which bridges the elements and which is secured to adjacent elements.

The elements may be integral with the means by which they are held together. For example the elongate elements and the means by which they are held together may comprise a unitary slotted sheet, which may be laminated with a foil sheet.

The sleeve, when formed from a heat-recoverable material, may have a temperature-indicating coating on its outer surface, and may be internally coated with a hot-melt adhesive.

The sleeve may be tubular or wraparound.

It will be appreciated that it is desirable that the elements are held together such that the liner can be wrapped around the cable joint without the elements twisting, so as to produce a substantially smooth profile on to which the sleeve may be recovered.

In accordance with another aspect of the invention, there is provided a method of enclosing a cable joint of non-uniform cross-section, comprising (i) wrapping a liner around the cable joint such that the whole length of the liner substantially conforms to the cable joint, the liner comprising a plurality of side-by-side elongate metal elements extending substantially along its whole length, the elongate metal elements of the liner being of substantially rectangular cross-section having a width of at least 5 mm and a thickness of at least 0.5 mm, and being held together by rigid interconnecting members, and (ii) placing a recoverable sleeve around the conforming liner and recovering the sleeve around the liner and the cable joint, such that on conforming the liner to the cable joint at least the ends of the elements are moved transversely relative to one another so that the liner is conformed to a change in cross-section of the joint.

The liner of the assembly of the invention can match closely a cable joint thus avoiding unnecessary bulk and reducing the amount of insulating air inside the liner. This latter feature is particularly advantageous when the assembly encloses a high voltage joint, in which the heat developed needs to be conducted away. This can be achieved conveniently with the present assembly by arranging, for example, for the liner to have good thermal conductivity. Subsequent enclosure by a recoverable sleeve then provides a very compact enclosed cable joint. Where the change in cross-sectional size of the cable joint is not too sharp, it is expected that the instant liner will be able to conform to the cable joint exactly. The change in size referred to is primarily a change in the size of the periphery, and not a change in cross-sectional area that would result from a constant peripheral size changing shape. This close fit is not normally possible with the rigid, solid-walled, canisters which have been used in the past.

The assembly comprises two main arts: a liner which may be preformed to match the cable joint, or which is planar for even more convenient storage and which has sufficient flexibility that it can be deformed on site to the shape required; and a recoverable sleeve. The liner may be bent or otherwise deformed to shape and then slid over or wrapped around the cable joint, or it may be installed in substantially cylindrical form and the recovery forces of the sleeve allowed to deform it to match the cable joint. Where the primary function of the liner is mechanical strength, for example against axial load, it may be desirable that the liner be formed from material too strong to be deformed by the recovery forces of the sleeve; in such cases the liner is preferably pre-shaped at some stage during its manufacture, or during installation by means that is independent of the effect, or even existence, of the sleeve. Where the liner is chosen for its electrical properties, screening or fault detection for example, a weaker material may be sufficient in which case deformation during installation may be preferred.

The liner itself has as its two main components a plurality of elongate elements arranged side-by-side, which provide the properties of mechanical strength or electrical continuity, and some form of connection between them, which allows the liner to follow the cable joint with the desired degree of exactness. The elongate elements are preferably sufficiently long to provide full strain relief across the joint.

The elongate elements are arranged side-by-side to form a cage-like structure around the cable joint. Where the cable joint increases in size, the liner does too, and this is accomplished as follows: each elongate element has, or may conveniently adopt, a configuration which corresponds to the profile of that part of the cable joint which underlies it, and as a result cylindrical parts of the cable joint will be surrounded by an array of virtually parallel elongate elements; and where the cable joint thickens or tapers, the elongate elements will respectively diverge or converge. It is because the elements must be able to diverge or converge at the changes in size of the cable joint that the design of the means for holding the elements together is limited.

Since the liner is manufactured as a generally flat structure, to be wrapped around the cable joint on site, or if part of the liner changes in cross-sectional size during installation, the means for holding the elements together must allow for movement between the elements at least at their ends, rather than for a static variation in separation along the length of the liner.

This movement between the elements is preferably allowed for in the following way. Unyielding sheet material may bridge the elements and be bonded to them, preferably by means of a mastic or a pressure-sensitive adhesive, or other means may hold the elements together. The sheet material or other means is positioned across the elements only at regions which will have some uniform cross-sectional size. Separate pieces of sheet material can of course be used, each at a region of different but uniform cross-sectional size.

Although this technique has been described in terms of sheet material as the means for holding the elements together, the same considerations apply to other rigid interconnecting means.

The elongate elements allow a casing to be formed which conforms closely to an irregular cable joint with all the advantages which this offers. Furthermore, this close conformation is achieved remarkably easily without damaging the integrity of the liner, since the joins between the elongate elements are so structured or so positioned that the elements can diverge or converge at the correct position without the elements twisting. Thus, on installation, the liner automatically can assume the desired shape and, in a preferred embodiment, automatically assumes the desired shape simply on being rolled into a tubular configuration.

A joint in a power cable has two end regions of smaller cross-sectional size and a central section of larger cross-sectional size. A similar profile will result when a single damaged cable is to be repaired and when a joint between a cable and a piece of equipment is to be enclosed.

The liner preferably has a contour having an intermediate section and end sections which in combination conform closely in use to the shape of the joint zone, the intermediate section being generally arched to accommodate the joint itself and the end sections contacting the cables, generally where they have been bared of their outer jackets. The intermediate section may assume one of many shapes (e.g., round, oblate, angular, segmental, etc.), but any angular portion which contacts the recoverable polymeric sleeve subtends an angle preferably greater than about 90°, more preferably greater than about 120°, and most preferably greater than about 135°. The desired configuration may be imparted to the elongate elements of the liner either before or after assembly by a variety of methods, such as stamping or molding, or if a light gauge material is used, simple bending by and may be sufficient. Where the cross-section of the cable joint is non-circular, different elongate elements will be deformed to different extents.

The intermediate, generally arched section of the liner need not be mid-way between the ends. An asymmetric positioning can sometimes be advantageous. For example, it has been found advantageous to have a symmetrical configuration where the liner is to encompass a splice between low voltage (less than about 1kV) electric cables, and an asymmetrical configuration for a high voltage, or for a branch joint, splice enclosure. As a further specific example, the cores of a multicore buried power cable may be individually insulated by heat-shrinkable tubular sleeves after splicing and before installation of a joint case. Such sleeves are slid onto one of each pair of cables to be jointed, the joint made, and the sleeve slid along over the joint and then recovered. As a result, the length along each cable pair to which access must be gained is asymmetric with respect to the joint. Since less access is needed on one side of the joint than the other for installation of the primary tubular sleeves, the trench that has to be dug can be smaller if the joint is made towards one side of the trench. A liner for the resulting splice should therefore by asymmetrically constructed. This assumes that both the liner and the outer recoverable sleeve are wraparound, since if they are tubular, they too must be slid along the cables requiring an even larger trench. Where excavation costs are significant or where the cable to be attended to is a single core of a multi-core cable where the other cores do not need attention, then a completely wraparound system may be preferred. In other situations, a tubular sleeve may be preferred.

The wraparound design of liner allows any one liner to be used over a wide variety of sizes of cable joints, since the extent of overlap can be varied. This reduces inventory costs and allows a double or greater thickness of liner to be used where greater strength or electrical protection is required. Since the liner is wraparound, it may be desirable to provide some means for holding the liner in position while the outer sleeve is installed. Tapes are ideal for this purpose.

It will be appreciated that the precise size and configuration of the liner will depend on the cable joint with which the liner is to be used, for example not only its size, but its voltage rating, and also, for example on whether it is an in-line joint or a branch joint.

The elongate elements may be chosen according to the particular cable to be enclosed. The elements may be metal or metal alloy strips, and thus serve as armoring to improve static and impact load resistances, giving the greatest measure of physical support to the cable joint, which is especially valuable for buried cables. They may also serve as electrical interconnection between the metal armor, sheath, screen or shielding of the cables to be jointed.

The rectangular elongate metal elements preferably have a width of at least about 10mm and a thickness of at least about lmm, especially at least about 3mm. It will be understood that a liner of such thickness is capable of carrying fault current and providing earth continuity.

Steel is the preferred metal, especially galvanized steel, although other metals are useful, such as copper or aluminum. Zinc coatings on ferrous metals such as galvanized steel, serve as protective coatings against corrosion. Other useful protective coatings comprise polymers, such as curable epoxy resins. Coatings applied to the elongate elements can also improve adhesion of any adhesive materials which contact the elongate elements.

The metal elements may be made from a broad range of materials, alone or in combination, providing the elements can be made to conform to the shape of the cable joint. Examples of suitable materials to be used in combination with metal, for example as a laminate include; molded plastic, rigid fibrous sheet and impregnated woven fabrics. The choice of materials will of course depend on the cables to be jointed.

As mentioned above, the means for holding the elements together is preferably one or more pieces of sheet material which bridge the elements and to which the elements are bonded. Each piece of sheet material may comprise one or more strips of tape, which are preferably positioned exclusively on an intermediate section of the elongate elements.

It is preferred, however, that the sheet material substantially completely covers the intermediate section of the array of elements.

Most preferably, the sheet material is comprised of a vapour impermeable material such as a metal foil. This imparts additional moisture barrier protection to the joint case, but at the expense of heat transferability. Unlike power cables, fiber optic, cable television and telecommunication cables do not generally have an overheating problem and this embodiment of the invention is therefore especially useful with these types of cables. Telecommunication cables are frequently filled with a hydrophobic filling compound. This embodiment of the invention lends itself especially well to filled joint case applications, the liner acting as a container for filling compound, advantageously eliminating the need for a separate inner liner or bag.

The rigid sheet material may include a polymeric material such as a polyester, for example, that marketed under the trademark Mylar. In a preferred embodiment, a laminate of metal and plastics, for example Mylar-aluminum foil-Mylar, is used. The material is preferably positioned on the inside of the liner for the following reason: the elongate elements may be cut from a sheet of galvanized or other surface treated material, and as a result, will lack protective coating on their cut edges, and the arrangement preferred allows a sealant coating on the outer sleeve to penetrate between adjacent elements, thus sealing these cut edges and providing a strong keyed product.

As an alternative to sheet material, a plurality of malleable solder dots may be employed to connect adjacent metal bridging elements.

Where the elongate elements are perforated, they may be held together by connectors, such as hooks, which link adjacent elements. Alternatively, the connectors may comprise two or more strips of material (such as molded polymers) having spaced protuberances on one surface, which are an interference fit into holes in the elongate elements. The holes could of course be provided in the connectors and the protrusions on the elongate elements.

A recoverable sleeve is positioned around, and preferably extends beyond the liner in order that it may be recovered around the liner and into contact with the cable, thereby environmentally sealing the cable joint. In some situations, however, environmental sealing may not be necessary, in which case the sleeve may need simply to engage the liner to urge the liner against the cable splice to hold it in position. In other situations the sleeve need be recoverable only at its end or ends.

Polymeric heat-recoverable materials and articles disclosed, for example, in above-mentioned U.S. Patent Nos. 2,027,962 to Currie and 3,086,242 to Cook, are suitable for use in the assembly of the present invention. The recoverable material can be, for example, polyethylene, polyvinyl chloride, polyvinylidene fluoride, or the like. Cross-linked polyethylene is preferred. Recoverable polymeric articles will recover generally by shrinking back to or towards their original heat-stable configuration when heated to a temperature above their crystalline melting temperature, for example, about 115°C in the case of polyethylene.

Recoverable sleeves are also known which do not require the application of heat, and may also be used in the present invention. Such articles are disclosed, for example, in above-mentioned U.S. Patent Nos. 4,070,746 to Evans et al, 4,135,553 to Evans et al and 4,179,320 to Midgley et al.

The assembly according to this invention may further comprise means for sealing at least end portions of the sleeve to the cables at either side of the cable joint. The sealing means may comprise a mastic, an adhesive, or simply a sealing means having no tackiness or adhesion. When the sealing means comprises an adhesive, it may be, for example, a pressure sensitive adhesive, a hot-melt adhesive, or an epoxy or other relative system. When recovery of the sleeve is accomplished by heating, the bonding means preferably comprises a hot-melt or other heat activated adhesive, especially a hot-melt adhesive whose tack temperature does not exceed the recovery temperature of the sleeve. In order to ensure that the correct bond line temperature is reached and to avoid excessive heating, the outer surface of the sleeve may contain a temperature indicating paint or other composition.

When the cables to be jointed are power or other current-carrying cables having metal armor or a screen and/or shielding which may carry fault current, electrical interconnection across the joint may be provided by the elongate elements of the liner which may then complete a ground path or fault current path. Where the elongate elements are to perform this function, it will be necessary for them to be electrically connected to the cable armor. Such electrical connection may be made by, for example, solder, a hose clamp, or by a rollspring clamp.

In some advantageous embodiments of the liner of the present invention, elongate elements at the ends form separate projections, or fingers that can conveniently be brought towards each other, overlapping if necessary, over a smaller diameter of the cable joint around which the liner is placed.

It will be appreciated that by arranging that the separation of the elongate elements of the liner can vary without the elements twisting, a particularly compact profile is provided for a liner that, whilst being of generally rectangular shape for example, has to encompass a cable joint of variable cross-section. Thus, where the elements are required to come together, for example where the liner is required to follow a change in cross-section from a relatively large splice region between two cables down to the relatively small area over each cable itself, they will not twist or buckle but will adopt a flat profile. This is especially advantageous where the liner is subsequently covered by relatively soft material that could be torn or split by an upturned edge of a twisted liner. Thus, the assembly of the invention has the particular advantage that the recoverable sleeve, for example of polymeric material, is not subject to splitting by the liner as it recovers over the liner.

Wraparound liners of the assembly of the invention require less space for installation, do not require the cable joints to be completely severed, and can be supplied and stored flat which allows stacking to save space. This last feature of space saving offers an advantage over other types of wraparound liners such as metal canisters or half-shells which cannot be stacked flat.

Assemblies, and methods for enclosing a cable joint of non-uniform cross-section will now be described, by way of example, with reference to the accompanying drawings, in which:-

FIGURE 1 is a side elevation of a liner;

FIGURES 2A and 2B are plan views of liners wherein elongate elements thereof are provided as metal strips which are held side-by-side by adhesive tape;

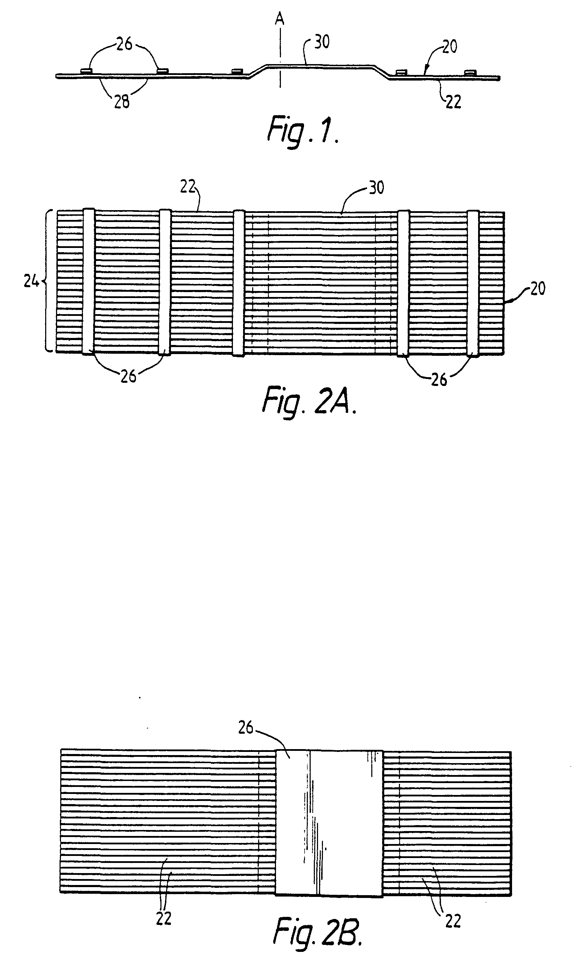

Figure 2A corresponding to the liner of Figure 1;

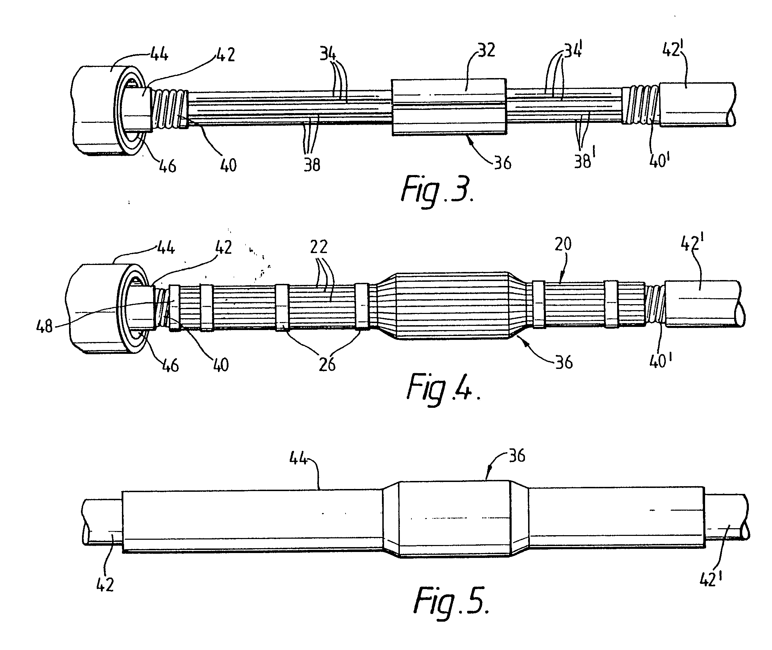

FIGURE 3 is a side elevation of an in-line joint in a three core power cable made after stripping back the cable jacket, armor and insulation from the cable ends and after positioning a recoverable sleeve over one cable end;

FIGURE 4 is a side elevation of the power cable joint of Figure 3 around which has been wrapped the liner of Figures 1 and 2A;

FIGURE 5 is a side elevation of the cable joint of Figure 4 after installation of the recoverable sleeve;

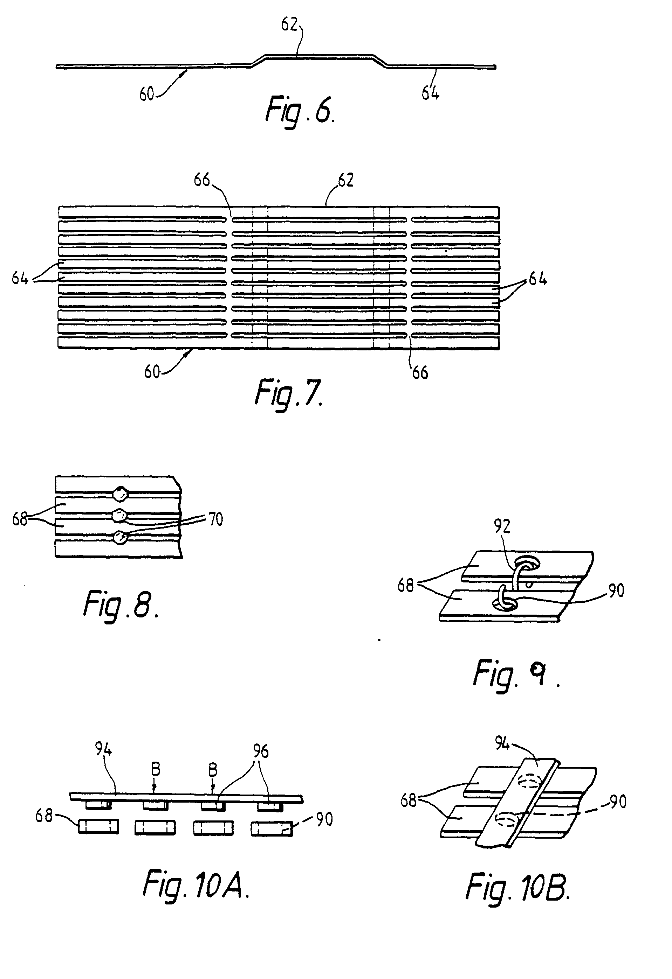

FIGURE 6 is a side elevation of an embodiment of a liner, which comprises a slotted sheet;

FIGURE 7 is a plan view of the liner of Figure 6 showing more clearly its details;

FIGURE 8 is a partial plan view of a further embodiment of a liner showing elongate elements thereof as strips held together by malleable solder dots;

FIGURE 9 is a partial plan view of a further embodiment of a liner, the elongate elements of which are perforated strips held together by a hook which links adjacent strips;

FIGURE 10A is an end elevation of a further embodiment of a liner, the elongate elements of which are perforated strips which are held together by a strip of tape having spaced protuberances on one surface which fit into said perforations; and

FIGURE 10B is a partial plan view of the liner of Figure 10A showing the protuberances of the tape engaged with the perforations.

Although the liner of Figures 1 to 5 is described as having metal elongate elements that are held together by flexible members, it is to be understood that the invention as now claimed requires such interconnection members to be rigid and Figures 1 to 5 are retained merely for convenience of presentation.

Referring to Figures 1 and 2A, a pre-shaped wraparound liner, 20, is shown in side elevation and plan view respectively. Elongate elements, 22, are shown as metal strips which are held together in a sheet array, 24, by a series of flexible strips of mylar, 26, bonded to the bridging elements, 22, by a pressure sensitive adhesive, 28.

The liner, 20, has an intermediate region, 30, asymmetrically positioned with respect to a centerline, A, shaped to conform closely to a cable joint.

Figure 2B is a plan view of a liner showing alternative positioning of the strips, 26, which as before, are sheets of adhesive backed Mylar. The strips or other means for holding the elements together are shown positioned exclusively in the intermediate section.

Figure 3 shows a joint, 32, in a three core power cable. The cores in the cables, 34, 34′, have been jointed in the region, 36. Before jointing the cores, insulating sheaths, 38, 38′, armoring, 40, 40′, and outer jackets 42, 42′, were stripped back, and a heat-recoverable polymeric sleeve, 44, having a hot-melt adhesive layer, 46, on an inner surface was positioned over one cable end.

Figure 4 shows a wraparound liner, 20, installed around a cable joint, 32. The bridging elements, 22, are then physically and electrically joined to teh cable armoring, 40, 40′, by means of hose clamps, 48, only one of which is shown in the drawing.

Figure 5 shows the finished joint case after a polymeric sleeve, 44, has been positioned over the joint region, 36, and recovered into contact with the cable jackets, 42, 42′, to form an environmental seal.

Figure 6 is a side elevation of wraparound liner formed from a slotted sheet, 62. In Figure 7, a plan view of the same liner as Figure 6, elongate elements, 64, are shown as having interconnecting portions, 66, therebetween. Two interconnecting portions, 66, join each pair of adjacent elements, 64, but the elements are not joined together at the far left and right hand sides as drawn, thus allowing the liner to conform to a substrate in the way required. The broken transverse lines indicate the portions of the liner that extend over the radial transitions of the substrate.

Figure 8 shows in partial view alternative means for holding the elements, 68, in a sheet array. In Figure 8, a plurality of malleable solder dots, 70, have been employed to connect adjacent metal elements, 68.

Elements 68 may be linked by a hook 92 as shown in Figure 9.

In Figure 10A, a strip, 94, is shown having spaced protuberances, 96, molded integrally on one of its surfaces, which can be press-fitted into perforations, 90, by applying pressure at points B. In Figure 10B the strip connector, 94, is shown after installation.

## Claims

1. An assembly (20, 44) for enclosing a cable joint (32, 34, 34′, 38, 38′, 40, 40′) of non-uniform cross-section, comprising (i) a liner (20) that is adapted to be wrapped conformingly around the cable joint (32, 34, 34′, 38, 38′, 40, 40′), the liner comprising a plurality of side-by-side elongate metal elements (22, 64, 68) extending along substantially its whole length, and (ii) a recoverable sleeve (44) which is positionable around the liner (20) after the liner (20) has been wrapped around the joint (32, 34, 34′, 38, 38′, 40, 40′), the assembly being characterised in that the elongate metal elements (22, 64, 68) are of substantially rectangular cross-section having a width of at least 5 mm and a thickness of at least 0.5 mm, and in that the elongate metal elements (22, 64, 68) are held together by rigid interconnecting members (66, 70, 94) such that at least the ends of the elements (22, 64, 68) are movable transversely relative to one another such that the liner (20) is conformable to a change in cross-section of the joint (32, 34, 34′, 38, 38′, 40, 40′).

2. An assembly according to Claim 1, characterised in that the elongate metal elements (22, 64, 68) of the liner (20) are held together by sheet material (26) over at least one longitudinally-extending region thereof, each of said regions being arranged, in use, to enclose a portion of the cable joint (32, 34, 34′, 38, 38′, 40, 40′), that is of substantially uniform cross-section longitudinally of the liner (20).

3. An assembly according to claim 2, characterised in that a pressure sensitive adhesive coating bonds the elements (22, 64, 68) to the sheet material (26).

4. An assembly accordingly to claim 2 or 3, characterised in that the sheet material (26) comprises tape or metal foil.

5. An assembly according to any preceding claim, characterised in that the elongate elements (64) are integral with the means (66) by which they are connected, together, interconnections between adjacent elements (64) being so positioned as to allow the separation between the elements (64) to vary.

6. An assembly according to claim 5, characterised in that the elongate elements (64) and the means (66) by which they are held together comprise a unitary slotted sheet (62).

7. An assembly according to any preceding claim, characterised in that the elongate elements (22, 64, 68) have a width of at least 10mm, and a thickness of at least 1.0 mm and preferably at least 3 mm.

8. An assembly according to any preceding claim, characterised in that the liner (20) has a longitudinally intermediate region (30) that is arranged with respect to its end regions such that when wrapped into a tubular configuration it is of non-uniform cross-section.

9. An assembly accordingly to claim 8, characterised in that said tubular configuration comprises a central larger diameter cylindrical part (30) tapering at each end to a smaller diameter cylindrical part.

10. An assembly according to any of claims 1 to 7 wherein before being wrapped around the cable joint the liner is planar.

11. An assembly according to any preceding claim, characterised in that the liner (20) is made of steel.

12. An assembly according to any preceding claim, characterised in that the sleeve (44) is heat-recoverable.

13. An assembly according to any preceding claim, characterised in that the sleeve (44) is coated on one surface with a sealant or adhesive, preferably a heat-activatable adhesive.

14. An assembly according to any of claims 1 to 13, enclosing a cable joint (32, 34, 34', 38, 38', 40, 40').

15. A method of enclosing a cable joint (32, 34, 34', 38, 38', 40, 40') of non-uniform cross-section, comprising (i) wrapping a liner (20) around the cable joint (32, 34, 34', 38, 38', 40, 40') such that the whole length of the liner substantially conforms to the cable joint (32, 34, 34', 38, 38', 40, 40'), the liner comprising a plurality of side-by-side elongate metal elements (22, 64, 68) extending substantially along its whole length, the elongate metal elements (22, 64, 68) of the liner (20) being of substantially rectangular cross-section having a width of at least 5 mm and a thickness of at least 0.5 mm, and being held together by rigid interconnecting members (66, 70, 94) and (ii) placing a recoverable sleeve (44) around the conforming liner (20) and recovering the sleeve (44) around the liner (20) and the cable joint (32, 34, 34', 38, 38', 40, 40'), such that on conforming the liner (20) to the cable joint (32, 34, 34', 38, 38', 40, 40') at least the end of the elements (22, 64, 68) are moved transversely relative to one another so that the liner (20) is conformed to a change in cross-section of the joint (32, 34, 34', 38, 38', 40, 40').

16. A method according to claim 15, characterised in that the elongate metal elements (22, 64, 68) before installation have a non-liner configuration which corresponds substantially to the profile of the cable joint (32, 34, 34', 38, 38', 40, 40'), and in that wrapping the liner (20) around the cable joint (32, 34, 34', 38, 34', 40, 40') causes the separation between the elements (22,64,68) to vary.

**Patentansprüche**

1. Anordnung (20, 44) zum Ummanteln einer Kabelverbindung (32, 34, 34', 38, 38', 40, 40') mit ungleichmäßigem Querschnitt, umfassend (i) eine Einlage (20), die sich um die Kabelverbindung (32, 34, 34', 38, 38', 40, 40') herum, an diese anpassend herumwickeln läßt, wobei die Einlage eine Vielzahl von nebeneinander liegenden, länglichen Metallelementen (22, 64, 68) aufweist, die sich im wesentlichen über ihre gesamte Länge erstrecken, und (ii) eine rückstellbare Muffe (44), die um die Einlage (20) herum positionierbar ist, nachdem die Einlage (20) um die Verbindung (32, 34, 34', 38, 38', 40, 40') herumgewickelt worden ist, wobei die Anordnung dadurch gekennzeichnet ist, daß die länglichen Metallelemente (22, 64, 68) einen im wesentlichen rechteckigen Querschnitt mit einer Breite von mindestens 5 mm und einer Dicke von mindestens 0,5 mm haben, und daß die länglichen Metallelemente (22, 64, 68) mit steifen Verbindungselementen (66, 70, 94) zusammengehalten sind, so daß zumindest die Enden der Elemente (22, 64, 68) relativ zueinander in Querrichtung bewegbar sind, so daß die Einlage (20) an eine Änderung des Querschnitts der Verbindung (32, 34, 34', 38, 38', 40, 40') anpaßbar ist.

2. Anordnung nach Anspruch 1, dadurch gekennzeichnet, daß die länglichen Metallelemente (22, 64, 68) der Einlage (20) mit einem Bahnmaterial (26) über zumindest einen sich in seiner Längsrichtung erstreckenden Bereich zusammengehalten sind, wobei jeder Bereich im Betrieb so angeordnet ist, daß er einen Bereich der Kabelverbindung (32, 34, 34', 38, 38', 40, 40') umschließt, der in Längsrichtung der Einlage (20) von im wesentlichen gleichförmigem Querschnitt ist.

3. Anordnung nach Anspruch 2, dadurch gekennzeichnet, daß eine druckempfindliche Klebstoffbeschichtung die Elemente (22, 64, 68) mit dem Bahnmaterial (26) verbindet.

4. Anordnung nach Anspruch 2 oder 3, dadurch gekennzeichnet, daß das Bahnmaterial (26) Band oder Metallfolie aufweist.

5. Anordnung nach einem der vorherigen Ansprüche, dadurch gekennzeichnet, daß die länglichen Elemente (64) integral mit den Mitteln (66) ausgebildet sind, mit denen sie verbunden sind, wobei Verbindungen zwischen benachbarten Elementen (64) so positioniert sind daß sie eine veränderliche Trennung zwischen den Elementen (64) ermöglichen.

6. Anordnung nach Anspruch 5, dadurch gekennzeichnet, daß die länglichen Elemente (64) und die Mittel (66), mit denen sie zusammengehalten sind, eine einstückige, geschlitzte Bahn (62) aufweisen.

7. Anordnung nach einem der vorherigen Ansprüche, dadurch gekennzeichnet, daß die länglichen Elemente (22, 64, 68) eine Breite von mindestens 10 mm und eine Dicke von mindestens 1,0 mm und vorzugsweise von mindestens 3 mm haben.

8. Anordnung nach einem der vorherigen Ansprüche, dadurch gekennzeichnet, daß die Einlage (20) einen Zwischenbereich (30) in Längsrichtung aufweist, der bezüglich seiner Endbereiche so angeordnet ist, daß er dann, wenn er zu einer rohrförmigen Konfiguration gewickelt ist, einen ungleichmäßigen Querschnitt hat.

9. Anordnung nach Anspruch 8, dadurch gekennzeichnet, daß die rohrförmige Konfiguration einen mittleren zylindrischen Teil (30) mit größerem Durchmesser aufweist, der sich an beiden Enden zu einem zylindrischen Teil mit kleinerem Durchmesser verjüngt.

10. Anordnung nach einem der Ansprüche 1 bis 7, wobei die Einlage, bevor sie um die Kabelverbindung herumgewickelt ist, eben ist.

11. Anordnung nach einem der vorherigen Ansprüche, dadurch gekennzeichnet, daß die Einlage (20) aus Stahl besteht.

12. Anordnung nach einem der vorherigen Ansprüche, dadurch gekennzeichnet, daß die Muffe (44) durch Wärme rückstellbar ist.

13. Anordnung nach einem der vorherigen Ansprüche, dadurch gekennzeichnet, daß die Muffe (44) auf einer Oberfläche mit einem Dichtungsmittel oder einem Klebstoff, vorzugsweise mit einem durch Wärme aktivierbaren Klebstoff beschichtet ist.

14. Anordnung nach einem der Ansprüche 1 bis 13, die eine Kabelverbindung (32, 34, 34', 38, 38', 40, 40') ummantelt.

15. Verfahren zum Ummanteln einer Kabelverbindung (32, 34, 34', 38, 38', 40, 40') mit ungleichmäßigem Querschnitt, umfassend (i) Herumwikkeln einer Einlage (20) um die Kabelverbindung (32, 34, 34', 38, 38', 40, 40'), so daß die gesamte Länge der Einlage sich im wesentlichen an die Kabelverbindung (32, 34, 34', 38, 38', 40, 40') anpaßt, wobei die Einlage eine Vielzahl von nebeneinander angeordneten länglichen Metall elementen (22, 64, 68) aufweist, die sich im wesentlichen über ihre gesamte Länge erstrekken, wobei die länglichen Metallelemente (22, 64, 68) der Einlage (20) einen im wesentlichen rechteckigen Querschnitt mit einer Breite von mindestens 5 mm und einer Dicke von mindestens 0,5 mm haben und durch steife Verbindungselemente (66, 70, 94) zusammengehalten sind, und (ii) Anordnen einer rückstellbaren Muffe (44) um die sich anpassende Einlage (20) und Rückstellen der Muffe (44) um die Einlage (20) und die Kabelverbindung (32, 34, 34', 38, 38', 40, 40'), so daß bei der Anpassung der Einlage (20) an die Kabelverbindung (32, 34, 34', 38, 38', 40, 40') zumindest die Enden der Elemente relativ zueinander in Querrichtung bewegt werden, so daß die Einlage (20) an eine Änderung im Querschnitt der Verbindung (32, 34, 34', 38, 38', 40, 40') angepaßt wird.

16. Verfahren nach Anspruch 15, dadurch gekennzeichnet, daß die länglichen Metallelemente (22, 64, 68) vor dem Einbau eine nichtlineare Konfiguration haben, die im wesentlichen dem Profil der Kabelverbindung (32, 34, 34', 38, 38', 40, 40') entspricht, und daß das Herumwikkeln der Einlage (20) um die Kabelverbindung (32, 34, 34', 38, 38', 40, 40') bewirkt, daß die Trennung zwischen den Elementen (22, 64, 68) sich ändert.

## Revendications

1. Ensemble (20, 44) pour renfermer une jonction de câbles (32, 34, 34', 38, 38', 40, 40') de section transversalement non uniforme, comprenant (i) une garniture (20) qui est conçue pour être enroulée, en l'épousant, autour de la jonction de câbles (32, 34, 34', 38, 38', 40, 40'), la garniture comprenant plusieurs éléments métalliques allongés côte à côte (22, 64, 68) s'étendant sensiblement sur toute sa longueur, et (ii) un manchon (44) doué de reprise de forme qui peut être positionné autour de la garniture (20) après que la garniture (20) a été enroulée autour de la jonction (32, 34, 34', 38, 38', 40, 40'), l'ensemble étant caractérisé en ce que les éléments métalliques allongés (22, 64, 68) sont d'une section transversale sensiblement rectangulaire ayant une largeur d'au moins 5 mm et une épaisseur d'au moins 0,5 mm, et en ce que les éléments métalliques allongés (22, 64, 68) sont maintenus assemblés par des organes rigides (66, 70, 94) les reliant entre eux de manière qu'au moins les extrémités des éléments (22, 64, 68) soient mobiles transversalement les unes par rapport aux autres afin que la garniture (20) puisse se conformer à un changement de la section transversale de la jonction (32, 34, 34', 38, 38', 40, 40').

2. Ensemble selon la revendication 1, caractérisé en ce que les éléments métalliques allongés (22, 64, 68) de la garniture (20) sont maintenus assemblés par une matière en feuille (26) sur au moins une zone s'étendant longitudinalement de cette garniture, chacune desdites zones étant agencée, lors de l'utilisation, pour renfermer un tronçon de la jonction de câbles (32, 34, 34', 38, 38', 40, 40'), qui est de section transversale sensiblement uniforme longitudinalement à la garniture (20).

3. Ensemble selon la revendication 2, caractérisé en ce qu'un revêtement d'adhésif auto-collant lie les éléments (22, 24, 68) à la matière en feuille (26).

4. Ensemble selon la revendication 2 ou 3, caractérisé en ce que la matière en feuille (26) comprend un ruban ou une mince feuille de métal.

5. Ensemble selon l'une quelconque des revendications précédentes, caractérisé en ce que les éléments allongés (64) sont réalisés d'une seule pièce avec les moyens (66) par lesquels ils sont reliés entre eux, les liaisons mutuelles entre éléments adjacents (64) étant disposées de façon à permettre à l'écartement entre les éléments (64) de varier.

6. Ensemble selon la revendication 5, caractérisé en ce que les éléments allongés (64) et les moyens (66) par lesquels ils sont maintenus assemblés comprennent une feuille fendue d'une seule pièce (62).

7. Ensemble selon l'une quelconque des revendications précédentes, caractérisé en ce que les éléments allongés (22, 64, 68) ont une largeur d'au moins 10 mm et une épaisseur d'au moins 1,0 mm et de préférence d'au moins 3 mm.

8. Ensemble selon l'une quelconque des revendications précédentes, caractérisé en ce que la garniture (20) comporte une zone longitudinalement intermédiaire (30) qui est agencée, par rapport à ses zones extrêmes, de manière que, lorsqu'elle est enroulée en une configuration tubulaire, elle soit d'une section transversale non uniforme.

9. Ensemble selon la revendication 8, caractérisé en ce que ladite configuration tubulaire comprend une partie cylindrique centrale (30) de grand diamètre, s'effilant à chaque extrémité jusqu'à une partie cylindrique de plus faible diamètre.

10. Ensemble selon l'une quelconque des revendications 1 à 7, dans lequel, avant d'être enroulée autour de la jonction de câbles, la garniture est plane.

11. Ensemble selon l'une quelconque des revendications précédentes, caractérisé en ce que la garniture (20) est réalisée en acier.

12. Ensemble selon l'une quelconque des revendications précédentes, caractérisé en ce que le manchon (44) est doué de reprise de forme à chaud.

13. Ensemble selon l'une quelconque des revendications précédentes, caractérisé en ce que le manchon (44) est revêtu, sur une surface, d'une matière d'étanchéité ou d'un adhésif, de préférence un adhésif pouvant être activé par la chaleur.

14. Ensemble selon l'une quelconque des revendications 1 à 13, renfermant une jonction de câbles (32, 34, 34', 38, 38', 40, 40').

15. Procédé pour renfermer une jonction de câbles (32, 34, 34', 38, 38', 40, 40') de section transversale non uniforme, consistant (i) à enrouler une garniture (20) autour de la jonction de câbles (32, 34, 34', 38, 38', 40, 40') de manière que toute la longueur de la garniture épouse sensiblement la jonction de câbles (32, 34, 34', 38, 38', 40, 40'), la garniture comprenant plusieurs éléments métalliques allongés côte à côte (22, 64, 68) s'étendant sensiblement sur toute sa longueur, les éléments métalliques allongés (22, 64, 68) de la garniture (20) étant d'une section transversale sensiblement rectangulaire ayant une largeur d'au moins 5 mm et une épaisseur d'au moins 0,5 mm, et étant maintenus assemblés par des éléments rigides (66, 70, 94) les reliant les uns aux autres, et (ii) à placer un manchon (44) doué de reprise de forme autour de la garniture conformable (20) et à soumettre le manchon (44) à une reprise de forme autour de la garniture (20) et de la jonction de câbles (32, 34, 34', 38, 38', 40, 40') de manière que, en conformant la garniture (20) sur la jonction de câbles (32, 34, 34', 38, 38', 40, 40'), au moins les extrémités des éléments (22, 64, 68) soient déplacées transversalement les unes par rapport aux autres afin que la garniture (20) se conforme à un changement de la section transversale de la jonction (32, 34, 34', 38, 38', 40, 40').

16. Procédé selon la revendication 15, caractérisé en ce que les éléments métalliques allongés (22, 64, 68), avant l'installation, présentent une configuration non linéaire qui correspond sensiblement au profil de la jonction de câbles (32, 34, 34', 38, 38', 40, 40'), et en ce que l'enroulement de la garniture (20) autour de la jonction de câbles (32, 34, 34', 38, 38', 40, 40') provoque une variation de l'écartement entre les éléments (22, 64, 68).

Fig.1.

Fig. 2A.

Fig.2B.

*Fig. 3.*

*Fig. 4.*

*Fig. 5.*

62

60                                                              64

Fig. 6.

66                                    62

64                                                              64

60                                                              66

Fig. 7.

68                    70

Fig. 8.

92

68                                    90

Fig. 9.

94        B    B    96

68                                    90

Fig. 10A.

94

68                                    90

Fig. 10B.